# FASCICULE DE BREVET EUROPEEN

(11) **EP 0 426 555 B1**
(45) Date de publication et mention de la délivrance du brevet: **18.11.1993**
(21) Numéro de dépôt: 90403057.4
(22) Date de dépôt: 29.10.1990
(51) Int. Cl.: B62D 55/065, B62D 55/084

(54) **Véhicule pour interventions, notamment dans des bâtiments**
Fahrzeug für Einsätze, insbesondere in Gebäuden
Vehicle for interventions, especially inside buildings

(30) Priorité: 31.10.1989 FR 8914279
(43) Date de publication de la demande: 08.05.1991
(73) Titulaire: FRAMATOME, 92400 Courbevoie (FR)
(72) Inventeur: Carra, Olivier, F-26380 Peyrins (FR); Delevallée, Alain, F-69130 Ecully (FR)
(74) Mandataire: Bourely, Paul

(56) Documents cités:
- EP-A- 0 197 020
- EP-A- 0 206 930
- FR-A- 2 529 157
- US-A- 3 447 620
- US-A- 4 702 331

## Description

La présente invention concerne un véhicule pour interventions, notamment dans des bâtiments.

Elle trouve notamment application dans des installations industrielles lorsqu'une intervention est nécessaire mais serait dangereuse ou impossible pour un opérateur humain. Un véhicule selon la présente invention peut alors être utilisé. Pour cela il peut être muni d'instruments adéquats tels que des caméras vidéo, des appareils de mesure, et des outils, avec l'aide desquels on constitue un robot.

Un robot selon la présente invention peut être notamment utile dans une centrale nucléaire ou dans une usine de retraitement de combustibles nucléaires lorsque des réparations ou des inspections doivent être faites dans des zones qui sont soumises à de fortes intensités de radiations ionisantes après certains incidents de fonctionnement. De tels robots peuvent cependant être également utiles dans d'autres industries, par exemple dans l'industrie chimique en présence de risques d'explosion, ou pour des missions de sécurité civile ou de surveillance de sites, ou dans le cadre de la robotique de service, par exemple pour des opérations de nettoyage, dans l'agriculture ou dans les activités militaires.

Une qualité importante d'un véhicule de ce genre est son aptitude à se déplacer sur un sol accidenté, c'est-à-dire présentant des obstacles à franchir. Ces derniers peuvent présenter des formes très diverses, par exemple un escalier qui a été prévu pour l'homme et qui doit être monté ou descendu, ou un tuyau tombé sur un plancher. La sûreté de tels véhicules lors du franchissement de tels obstacles présente deux aspects principaux. L'un est la stabilité, c'est-à-dire l'aptitude du véhicule à ne pas basculer sous son propre poids et celui de sa charge. L'autre est l'adhérence et concerne chacun des propulseurs de ce véhicule, c'est-à-dire des organes qui prennent appui sur le sol pour soutenir et faire progresser ou immobiliser le véhicule. L'adhérence est l'aptitude de ces propulseurs à ne pas glisser excessivement au contact du sol, même si ce dernier présente localement un état de surface défavorable.

Une autre qualité importante pour un tel véhicule concerne son encombrement, notamment transversal et longitudinal, qui devrait être suffisamment petit pour que le véhicule puisse emprunter, à l'intérieur d'un bâtiment, divers couloirs ou passages plus ou moins étroits qui ont été seulement prévus pour un opérateur humain.

Une autre qualité importante est que le véhicule soit aussi léger que possible.

Divers véhicules ont été conçus pour présenter une bonne aptitude à franchir des obstacles avec sûreté. Un premier véhicule est connu par le brevet européen EP 197 020 des ACEC qui décrit un véhicule télécommandé constituant un robot pour inspections et interventions en milieux hostiles. Il possède un ensemble moteur, c'est-à-dire des moyens d'entraînement et de freinage, qui est intégré dans un châssis principal constituant un corps de véhicule. Il possède aussi des moyens pour transmettre le mouvement d'avance défini par cet ensemble moteur à des chenilles qui sont portées à l'extérieur du châssis par des propulseurs portés par ce corps de véhicule. Il est équipé de deux propulseurs à l'avant et à l'arrière sur chacun desquels sont montées deux chenilles droite et gauche. Chaque propulseur peut être incliné par rapport au corps de véhicule à partir de celui-ci. De ce fait, si le robot rencontre un obstacle frontal de hauteur modérée et sensiblement constante selon la direction transversale, il pourra le surmonter en conservant une position quasiment horizontale du corps de véhicule. Si par contre il rencontre un obstacle frontal de forte déclivité transversale, il risque en le franchissant de basculer sur le côté.

Un deuxième véhicule connu se déplace à l'aide de pieds qui ont une configuration de type "araignée" et qui lui permettent de franchir des petits obstacles de formes très variées. Mais il se déplace très lentement parce qu'un déplacement simultané de plusieurs pieds de l'appareil n'est généralement pas possible.

Un troisième véhicule connu comporte quatre propulseurs chenillés inclinables par rapport au corps de ce véhicule. La chenille de chacun de ces propulseurs est guidée par un certain nombre d'organes de guidage, notamment par deux pignons dont l'un est un pignon moteur pour entraîner le mouvement d'avance de cette chenille. Ces organes sont portés par une carcasse qui constitue la structure de ce propulseur et qui est assemblée au corps du véhicule de manière à permettre d'incliner le propulseur autour d'un axe transversal. Le corps de ce véhicule porte des ensembles moteurs d'avance et d'inclinaison comportant des moteurs pour entraîner les uns les pignons moteur par l'intermédiaire de systèmes de transmission mécaniques et les autres les mouvements d'inclinaison des propulseurs, respectivement. Ces ensembles comportent aussi des freins pour contrôler ces mouvements. Le corps du véhicule porte en outre des batteries d'alimentation en énergie électrique et des moyens de commande pour les ensembles moteurs.
Ce troisième véhicule connu a été proposé par la firme japonaise Mitsubishi sous le nom de MRV (Multifunctional Robot Vehicle) et a été décrit pages 425 et 426 du compte rendu de conférence "85 ICAR International Conference on Advanced Robotics, September 9-10, 1985, Tokyo, Japan organized by : Robotics Society of Japan, The Society of Biomechanisms, Japan Industrial Robot Association".
Il semble permettre de franchir des obstacles de formes connues et sa vitesse moyenne de progression semble pouvoir être bien supérieure à celle du deuxième véhicule connu précédemment mentionné.
Il semble cependant ne présenter les qualités importantes précédemment mentionnées qu'à un degré insuffisant.

La demande de brevet européen EP-A-206 930 décrit un quatrième véhicule connu comportant de manière générale divers éléments tels qu'indiqués dans le préambule de la revendication 1. Plus particulièrement ce véhicule connu comporte deux paires de propulseurs avant et arrière, portées par des parties avant et arrière du corps de véhicule et constituées chacune de deux propulseurs à chenilles l'un à droite l'autre à gauche. Chaque propulseur comporte deux roues, avant et arrière, une chenille supportée et entraînée par ces roues, et des moyens d'appui de la chenille entre ces deux roues.

Ce véhicule connu présente une configuration variable en ce sens que les parties avant et arrière du corps de véhicule sont articulées l'une par rapport à l'autre autour d'un axe transversal médian. Cet axe coïncide avec celui des roues arrières de la paire de propulseurs avant et avec l'axe des roues avant de la paire arrière.

Il est indiqué qu'un déplacement du centre de gravité du véhicule, et que des modifications de la position angulaire mutuelle des deux parties du corps de véhicule permettent de franchir des obstacles sans compromettre la stabilité du véhicule.

Quoique ce véhicule connu semble devoir effectivement présenter une aptitude à franchir des obstacles sans perte de sa stabilité, cette aptitude apparaît devoir rester limitée.

La présente invention a notamment pour but de réaliser de manière simple un véhicule d'intervention apte à franchir avec sécurité des obstacles variés tout en conservant un encombrement transversal limité lui permettant d'emprunter des passages prévus pour l'homme. Elle vise aussi à permettre, par montage d'outils sur un tel véhicule, de réaliser un robot apte à effectuer des interventions dans des bâtiments divers, notamment lorsqu'un accident a rendu ces locaux inacessibles à un opérateur humain.

Dans ces buts, elle a pour objet un véhicule caractérisé comme indiqué dans la revendication 1.

A l'aide des figures schématiques ci-jointes, on va décrire ci-après comment la présente invention peut être mise en oeuvre, étant entendu que les éléments et dispositions mentionnés et représentés ne le sont qu'à titre d'exemples non limitatifs. Lorsqu'un même élément est représenté sur plusieurs figures il y est désigné par le même signe de référence.

La figure 1 représente une vue de c8té d'un véhicule selon la présente invention.

La figure 2 représente une vue de derrière du même véhicule.

La figure 3 représente une vue de côté d'un propulseur du même véhicule, dont les capots extérieurs ont été enlevés pour montrer les moyens de transmission internes de ce propulseur.

La figure 4 représente une vue d'un flanc latéral du corps inférieur du même véhicule, sans propulseurs ni éléments moteurs ou de commande.

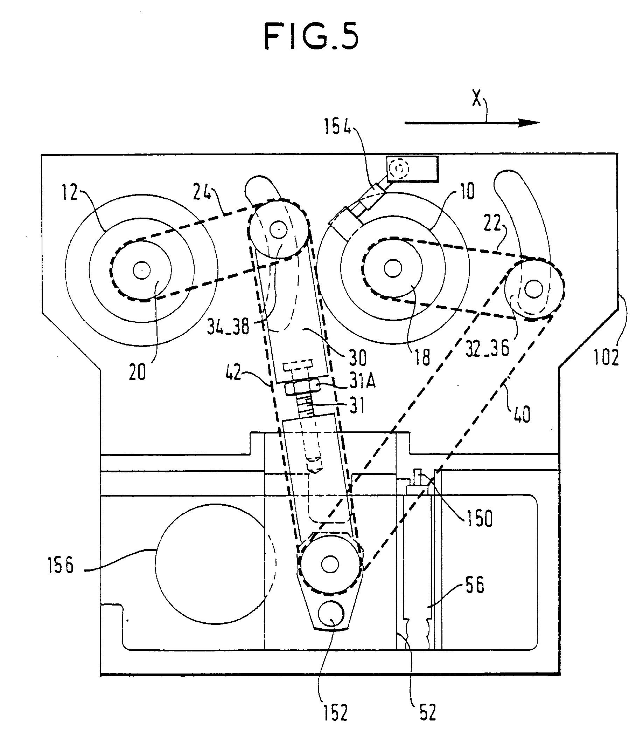

La figure 5 représente une vue d'une plaque d'assemblage de propulseur constituant une partie du flanc latéral de la figure 4.

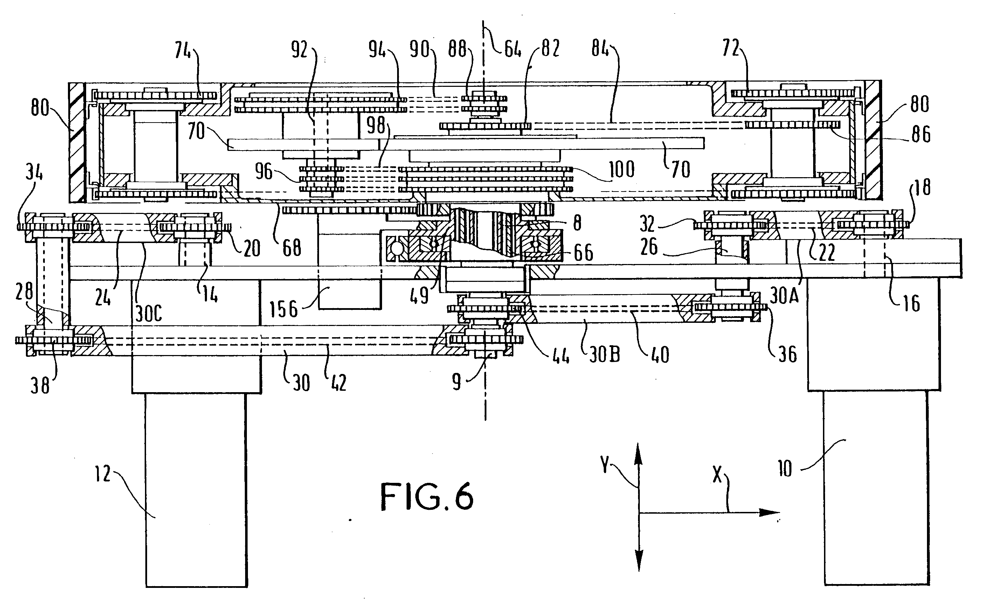

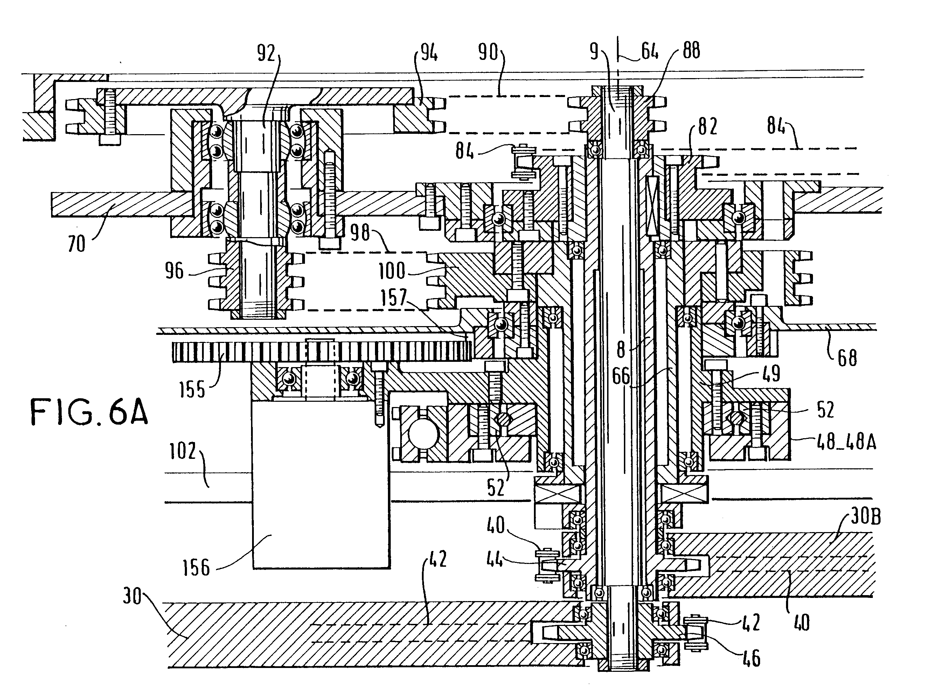

La figure 6 représente une vue de dessus du propulseur de la figure 3, dont la chenille et les éléments de guidage supérieur de celle-ci ont été enlevés.

La figure 6A représente une partie centrale de la figure 6, à échelle agrandie, en vue en coupe par un plan horizontal.

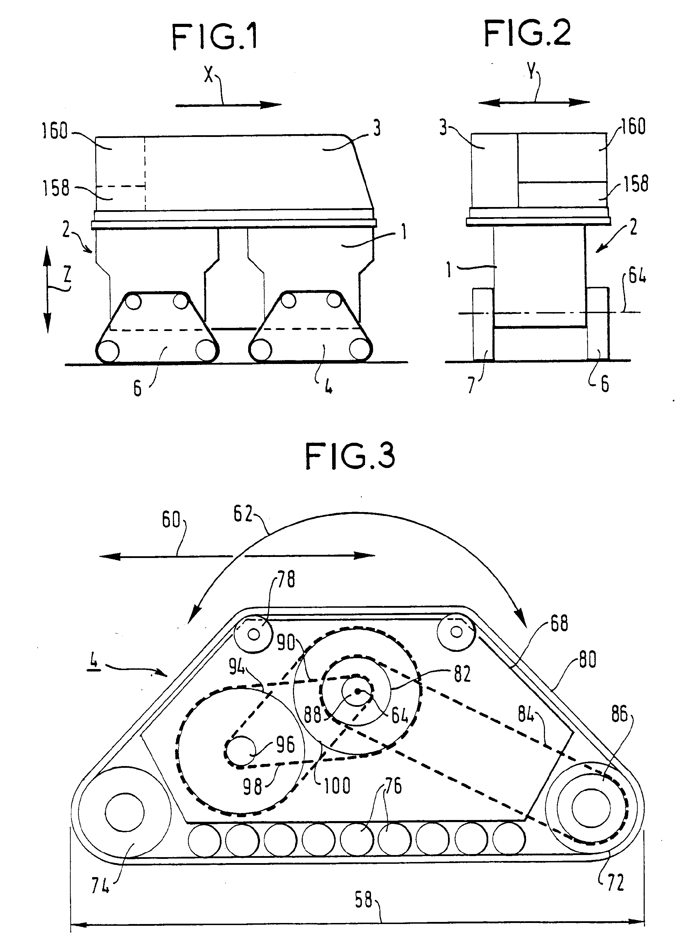

Conformément aux figures 1 et 2, un véhicule autonome selon la présente invention comporte un corps inférieur 1 et un corps supérieur 3 dont l'ensemble constitue un corps de véhicule 2. Le corps inférieur 1 est monté sur quatre propulseurs à chenilles tels que 4, 6 et 7 grâce auxquels il se déplace selon une direction longitudinale X. Il comporte en partie basse des batteries d'alimentation électrique dont le grand poids et la position basse contribuent à sa stabilité. Au dessus de ces batteries sont disposés des moteurs qui seront décrits plus loin et qui actionnent les propulseurs.

Le corps supérieur 3 est plus large que le corps inférieur selon une direction transversale Y. Il comporte des organes relativement légers tels que des moyens de formation de signaux d'appui 158, des moyens de traitement d'information 160, des moyens de communication, des organes électroniques de puissance ainsi que des capteurs exteroceptifs et un système inertiel non représentés. Une direction verticale relative du véhicule est représentée par une flèche Z.

L'encombrement transversal de ce corps supérieur est égal à celui du corps inférieur muni des propulseurs, de manière à disposer d'un volume suffisant sans augmenter l'encombrement transversal du véhicule.

On va maintenant indiquer diverses dispositions avantageuses qui sont toutes adoptées dans ce véhicule, mais dont certaines pourraient être omises tout en conservant les avantages des autres.

Certaines de ces dispositions sont de nature mécanique :
- Des moyens de liaison de propulseurs qui seront décrits plus loin sont portés par ledit corps de véhicule pour porter lesdits propulseurs,
- chacun de ces propulseurs tels que 4 comportant au moins un arbre récepteur transversal 8 s'étendant vers ledit corps de véhicule pour recevoir une énergie mécanique à partir de ce corps sous la forme d'une rotation de cet arbre, de manière à donner à ce propulseur au moins un mouvement d'avance pour assurer la propulsion dudit véhicule,
- ledit véhicule comportant encore des moteurs 10, 12 portés par ledit corps de véhicule pour fournir ladite énergie mécanique à chacun desdits propulseurs sous la forme de la rotation d'un arbre moteur transversal 14, 16 guidé en rotation par rapport audit corps de véhicule,
- et pour chaque dit arbre récepteur, des moyens de transmission externe pour faire entraîner chaque dit arbre récepteur par un dit arbre moteur,
- une disposition avantageuse étant que lesdits moyens de transmission externes pour faire entraîner un dit arbre récepteur 8, 9 par un dit arbre moteur 14, 16 sont essentiellement constitués par un compas de transmission comportant :
- une roue motrice 18, 20 d'axe transversal montée sur ledit arbre moteur,
- un premier élément de transmission linéaire 22, 24 qui s'étend à partir de ladite roue motrice selon une première branche de compas sensiblement perpendiculaire à l'axe de cette roue, et qui est entraîné par cette roue,
- un arbre intermédiaire transversal 26, 28,
- des moyens de maintien d'écartement 30 pour maintenir une première distance entre lesdits arbres moteur 14, 16 et intermédiaire 26, 28, et une deuxième distance entre lesdits arbres intermédiaire et récepteur 8, 9, tout en permettant à ces arbres 26, 28, 8, 9, de se déplacer perpendiculairement à eux-mêmes,
- une roue intermédiaire motrice 32, 34 entraînée par ledit premier élément de transmission linéaire et montée sur ledit arbre intermédiaire pour entraîner celui-ci,
- une roue intermédiaire réceptrice 36, 38 montée sur ledit arbre intermédiaire,
- un deuxième élément de transmission linéaire 40, 42 qui s'étend à partir de ladite roue intermédiaire réceptrice selon une deuxième branche de compas sensiblement perpendiculaire à l'axe de cette roue et qui est entraîné par cette roue,
- et une roue réceptrice 44, 46 entraînée par ledit deuxième élément de transmission linéaire et montée sur ledit arbre récepteur pour entraîner celui-ci.

Dans le véhicule donné en exemple, les roues motrices et réceptrices mentionnées ci-dessus, et d'autres qui seront mentionnées ci-après, sont des pignons dont les dents pénètrent dans les maillons de chaînes qui constituent lesdits éléments de transmission linéaires. Ces derniers pourraient cependant aussi être constitués par des courroies, crantées ou non.
Les moyens de transmission externes sont ainsi réalisés d'une manière simple qui autorise des débattements verticaux et longitudinaux de grandes amplitudes des propulseurs. En même temps la présence de tels moyens de transmission n'augmente pas, ou seulement peu, l'encombrement transversal du véhicule, notamment lorsqu'il s'agit de propulseurs latéraux disposés de part et d'autre du corps de véhicule selon la direction transversale.

Une autre disposition avantageuse est que lesdits moyens de liaison de propulseur comportent pour chaque dit propulseur 4 :
- une structure de portage de propulseur 48 qui est mobile et guidée par rapport audit corps de véhicule 2 pour lui permettre des débattements qui sont des translations de cette structure dans au moins un intervalle de débattement tel que 60 selon une direction de débattement correspondante perpendiculaire à ladite direction transversale Y, cette structure portant ledit propulseur,
- et des moyens de positionnement de propulseur 50 pour imposer à ladite structure de portage de propulseur une position commandée dans un tel intervalle de débattement.

Il peut y avoir soit un intervalle de débattement longitudinal seulement, soit un intervalle de débattement vertical seulement, soit les deux.

Une telle disposition permet une stabilisation continue du véhicule lorsque celui-ci progresse sur un sol présentant des pentes variables.

Une autre disposition avantageuse est que ladite structure de portage de propulseur comporte :
- une structure de guidage vertical par exemple à rails 52 portant ledit propulseur, par l'intermédiaire d'un palier suspendu 49, et guidée verticalement pour lui permettre un déplacement de suspension dans un dit intervalle de débattement qui est vertical,
- et une structure de guidage longitudinal 54 portant ladite structure de guidage vertical par l'intermédiaire de moyens de suspension 56 pour réaliser une suspension dudit véhicule, cette structure de guidage longitudinal étant guidée longitudinalement par rapport audit corps de véhicule 2 pour lui permettre de prendre une dite position commandée dans un dit intervalle de débattement 60 qui est longitudinal, de manière à permettre de stabiliser ledit véhicule par déplacement longitudinal de son centre de gravité par rapport audit propulseur lorsque ce véhicule monte ou descend une pente présentée par le sol sur lequel il progresse.

Une autre disposition avantageuse est que ledit propulseur 4 présente un intervalle d'appui au sol 58 qui s'étend selon ladite direction longitudinale et jusqu'à deux extrémités duquel il peut prendre appui sur le sol pour supporter ledit corps de véhicule,
- ladite structure de portage de propulseur 48 portant ce propulseur en lui permettant d'effectuer sur commande des mouvements d'inclinaison 62 qui sont des rotations autour d'un axe de propulseur 64,
- ledit véhicule comportant, pour chaque dit propulseur 4 :
- un moteur d'avance 10 et un moteur d'inclinaison 12 munis d'un arbre moteur d'avance 14 et d'un arbre moteur d'inclinaison 16 qui sont deux dits arbres moteurs,
- un arbre récepteur d'avance 8 et un arbre récepteur d'inclinaison 9 qui sont deux dits arbres récepteurs et qui s'étendent coaxialement selon ledit axe de propulseur 64,
- et des moyens de transmission externe d'avance 22, 40 et d'inclinaison 24, 42 constitués par deux dits compas de transmission pour faire entraîner lesdits arbres récepteurs d'avance et d'inclinaison par lesdits arbres moteurs d'avance et d'inclinaison, respectivement.

Ledit moteur d'inclinaison constitue un actionneur d'inclinaison de propulseur.

Une inclinaison d'un propulseur peut avoir pour effet de déplacer longitudinalement le point d'appui moyen du propulseur sur le sol et de déplacer verticalement l'axe du propulseur par rapport au sol. Elle a pour but de permettre au véhicule de franchir un obstacle.

Une autre disposition avantageuse est que ladite structure de portage de propulseur 48 comporte un arbre de portage de propulseur 66 s'étendant selon ledit axe de propulseur 64 dudit corps de véhicule 2 jusqu'au dit propulseur 4,
- ce propulseur comportant :
- une carcasse de propulseur 68, 70 guidée en rotation autour dudit arbre de portage 66,
- lesdits arbres récepteurs d'avance 8 et d'inclinaison 9 guidés coaxialement en rotation dans cet arbre de portage,
- un ensemble d'appui de propulseur 72, 74, 76, 80 pour prendre appui sur le sol dans ledit intervalle d'appui au sol 58,
   cet ensemble comportant au moins une roue d'avance 72 guidée en rotation, par rapport à ladite carcasse de propulseur 68, 70 autour d'un axe transversal,
- des moyens de transmission interne d'avance 82, 84, 86 pour faire entraîner au moins ladite roue d'avance par ledit arbre récepteur d'avance 8 de manière à donner un dit mouvement d'avance audit propulseur,
- et des moyens de transmission interne d'inclinaison 88, 90, 92, 94, 96, 98, 100 portés par ladite carcasse de propulseur, entraînés en rotation par ledit arbre récepteur d'inclinaison, et prenant un appui de rotation sur ledit arbre de portage de propulseur pour donner audit propulseur un dit mouvement d'inclinaison.

Une autre disposition avantageuse est que lesdits moyens de maintien d'écartement pour maintenir une distance entre deux arbres comportent :
- une bielle 30 s'étendant en appui entre ces deux arbres 28, 9 tout en permettant leurs rotations,
- et des moyens de réglage d'écartement pour permettre de donner à cette bielle, soit une longueur de service assurant la tension d'un élément de transmission linéaire souple tel que la chaîne motrice ou réceptrice 42, ou une courroie de transmission assurant la même fonction, soit une longueur de montage plus petite que cette longueur de service pour permettre de monter ou démonter ledit élément de liaison. Ces moyens sont symbolisés par une vis 31 et un écrou 31A. D'autres bielles jouant des rôles analogues sont représentées en 30A, 30B et 30C. Des moyens d'écartement analogues sont associés à ces autres bielles.

Une autre disposition avantageuse est que le véhicule comporte, pour chaque dit propulseur latéral 4, une plaque d'assemblage de propulseur 102 fixée de manière amovible audit corps de véhicule 2, s'étendant selon lesdites directions longitudinale X et verticale Z, et portant lesdits moteurs et arbres moteurs d'avance 10, 14 et d'inclinaison 12, 16, et lesdits moyens de transmission externe d'avance 22, 40 et d'inclinaison 24, 42.

Cette plaque d'assemblage porte la structure de guidage longitudinal telle que 54 qui porte une partie intermédiaire 48A de la structure de portage 48 qui porte elle même la structure de guidage vertical à rails 52. Cette dernière porte un palier suspendu de forme rectangulaire 49 qui est monté en balance, c'est-à-dire avec possibilité de rotation, sur l'arbre de portage 66.

Le véhicule comporte quatre dits propulseurs latéraux avant droit 4, avant gauche, arrière droit 6 et arrière gauche 7, et quatre dites structures de guidage longitudinal avant droit 54, avant gauche, arrière droit 55 et arrière gauche pour ces quatre propulseurs, respectivement. Dans ce cas une autre disposition avantageuse est que lesdits moyens de positionnement de propulseur comportent des moyens de coordination de positions 50, 104 pour coordonner des positions qu'ils commandent à deux dits propulseurs par l'intermédiaire des deux dites structures de guidage horizontal 54, 55 correspondantes.

Une autre disposition avantageuse est que lesdits moyens de positionnement de propulseur comportent, pour chacune des deux paires droite et gauche qui comportent, respectivement, l'une lesdits propulseurs avant droit 4 et arrière droit 6, l'autre lesdits propulseurs avant gauche et arrière gauche 7 :
- une entretoise de liaison 108 longitudinale reliant l'une à l'autre les deux structures de guidage horizontal 54, 55 qui correspondent aux deux propulseurs de cette paire,
- une vis de positionnement longitudinale 104 reliant également ces deux structures de guidage,
- un écrou d'entraînement rotatif 106 coopérant avec cette vis et bloqué longitudinalement par rapport audit corps de véhicule 2,
- et un moteur 50 pour faire tourner ledit écrou d'entraînement.

Ce moteur constitue un actionneur de positionnement de propulseurs communs aux deux dites paires. Il entraîne, par l'intermédiaire d'une chaîne 110, un arbre transversal 112 qui, à chacune de ses deux extrémités, entraîne l'un des deux écrous d'entraînement tels que 106 par l'intermédiaire d'un dispositif à pignons dit "de renvoi d'angle" tel que 114.

Une autre disposition avantageuse est que lesdits moyens de transmission interne d'inclinaison comportent au moins :
- une première roue motrice 88 monté sur ledit arbre récepteur d'inclinaison au-delà dudit arbre de portage 66,
- un premier élément de transmission linéaire 90 entraîné par cette première roue,
- un arbre intermédiaire de transmission interne d'inclinaison 92 qui est transversal et qui est guidé en rotation par rapport à ladite carcasse de propulseur,
- une première roue réceptrice 94 montée sur cet arbre intermédiaire et entraînée par ledit premier élément de transmission linéaire pour entraîner cet arbre en rotation,
- un deuxième roue motrice 96 montée sur cet arbre intermédiaire,
- un deuxième élément de transmission linéaire 98 entraîné par cette deuxième roue motrice,
- et une roue réceptrice d'appui d'inclinaison 100 coopérant avec ce deuxième élément de transmission et fixée, au moins angulairement, sur ledit arbre de portage pour faire tourner ledit arbre intermédiaire et ladite carcasse de propulseur autour de cet arbre de portage de manière à entraîner un dit mouvement d'inclinaison.

Une autre disposition avantageuse est que lesdites roues motrices 88 et 96 des moyens de transmission interne d'inclinaison présentent des diamètres plus petits que lesdites roues réceptrices 94 et 100 de manière que ces moyens de transmission constituent un réducteur de vitesse pour donner audit mouvement d'inclinaison une vitesse de rotation inférieure à celle dudit arbre récepteur d'inclinaison, afin de limiter les efforts qui doivent être appliqués par ledit moteur d'inclinaison 12 auxdits moyens de transmission externe, pour entraîner ledit mouvement d'inclinaison.

Dans ces moyens de transmission interne, comme dans les moyens de transmission externes, les roues motrices et réceptrices sont constituées par des pignons et lesdits éléments de transmission linéaires par des chaînes.

Une autre disposition est que ledit ensemble d'appui au sol de chaque dit propulseur latéral comporte :
- une chenille 80 prenant appui sur le sol,
- des moyens 72, 74, 76, 78 pour guider cette chenille,
- et une roue d'avance 72 tournant autour d'un axe transversal pour entraîner cette chenille.

Cet ensemble comporte plus précisément la roue d'avance 72 et une roue de guidage 74 aux deux extrémités dudit intervalle d'appui, des galets d'appui intermédiaires tels que 76, et des galets de renvoi tels que 78 pour guider la chenille 80 qui est seule au contact du sol. Cette chenille est crantée intérieurement, les roues 72 et 74 constituant des pignons dont les dents s'engagent entre les crans de la chenille.

Une autre disposition avantageuse est que lesdits moyens de transmission interne d'avance comportent :
- une roue motrice telle qu'un premier pignon 82 porté par ledit arbre récepteur d'avance 8 au-delà dudit arbre de portage 66,
- un élément de transmission linéaire tel qu'une chaîne 84 entraînée par ce premier pignon,
- et une roue réceptrice telle qu'un deuxième pignon 86 solidaire de ladite roue d'avance 72 et entraîné par cette chaîne pour entraîner un dit mouvement d'avance du propulseur 4.

Les diamètres de ces deux roues sont représentés égaux mais pourraient être différents, par exemple pour constituer un réducteur de vitesse.

D'autres dispositions avantageuses adoptées dans le même véhicule concernent les moyens de mesure et de traitement de signaux dont ce véhicule est équipé. On rappellera tout d'abord à ce sujet que chaque propulseur prend appui sur le sol en lui appliquant un ensemble de forces qui peut être représenté utilement, au moins partiellement par un certain nombre de paramètres. Ces derniers seront appelés ci-après "paramètres d'appui".

Une de ces dispositions avantageuses est que, pour déterminer un certain nombre de paramètres d'appui au sol d'un dit propulseur 4, on forme des signaux d'efforts représentatifs d'efforts appliqués à ce propulseur à partir de ce corps de véhicule 2, et on traite ces signaux d'efforts pour former des signaux d'appui représentatifs des paramètres d'appui à déterminer.

Plus particulièrement on forme au moins trois dits signaux d'efforts représentatifs d'efforts appliqués à un dit propulseur 4 à partir dudit corps de véhicule 2, et on traite ces signaux d'efforts pour former trois dits signaux d'appui représentant trois dits paramètres d'appui qui représentent eux-mêmes la composante de ladite force d'appui de ce propulseur dans un plan vertical longitudinal.

Pour cela, le véhicule comporte des capteurs d'efforts 150, 152, 154 pour former lesdits signaux d'efforts,
- et des moyens de formation de signaux d'appui 158 recevant et traitant notamment ces signaux d'efforts pour former lesdits signaux d'appui. Lesdits signaux d'appui représentent par exemple ladite composante de ladite force d'appui par son inclinaison, la position longitudinale de son point d'application au sol, et une intensité.

Une autre disposition avantageuse est que ledit arbre de portage 66 est monté dans le palier suspendu 49 qui fait partie de la structure de portage 48 de manière à être guidé en rotation autour dudit axe de propulseur 64. Plus particulièrement, l'arbre de portage 66 est monté en balance dans le palier suspendu 49 qui est guidé verticalement par rapport à la structure de portage 48 par l'intermédiaire de la structure de guidage vertical 52. Le véhicule comporte alors un capteur d'effort d'inclinaison 152 qui est un dit capteur d'effort et qui est monté entre ledit arbre de portage et une partie non rotative de la structure de portage de manière à empêcher la rotation de cet arbre et à fournir un signal d'effort d'inclinaison représentatif d'un moment d'inclinaison appliqué audit propulseur 4 par ledit corps de véhicule 2.

Une autre disposition avantageuse est qu'un capteur d'effort d'avance 154 est associé audit moteur d'avance 10 ou auxdits moyens de transmission externe d'avance 22, 40 pour fournir un signal d'effort d'avance représentatif du couple d'avance appliqué par ces moyens de transmission externe d'avance audit arbre récepteur d'avance 8, de manière que ce signal d'effort puisse être utilisé pour déterminer la composante tangentielle au propulseur dans un plan vertical longitudinal de ladite force d'appui.

Une autre disposition avantageuse est qu'un capteur d'effort vertical 150 est associé à cette structure de guidage vertical pour fournir un signal d'effort vertical représentant un effort vertical relatif appliqué audit propulseur 4 par ledit corps de véhicule 2 selon une direction verticale relative liée à ce corps de véhicule, de manière que ce signal d'effort vertical puisse être utilisé pour déterminer la composante de ladite force d'appui, normale à la surface d'appui du propulseur.

Une autre disposition avantageuse est que ledit véhicule comporte en outre des capteurs de configuration 156 pour fournir des signaux de configuration représentatifs de paramètres de configuration tels que la position et/ou l'inclinaison de chacun desdits propulseurs par rapport audit corps de véhicule 2 et/ou l'orientation de ce corps de véhicule par rapport à la verticale, lesdits moyens de formation de signaux d'appui 158 recevant et traitant aussi ces signaux de configuration pour former lesdits signaux d'appui.

L'un desdits capteurs de configuration est un capteur d'inclinaison 156 porté par le corps de véhicule 2. Il mesure, par l'intermédiaire d'un pignon 155 qui lui est coaxial et coopère avec un pignon 157 solidaire de la carcasse 70 du propulseur 4, la rotation de cette carcasse autour de l'axe de propulseur 64. Il fournit un signal d'inclinaison de propulseur représentatif de l'inclinaison du propulseur par rapport au corps du véhicule.

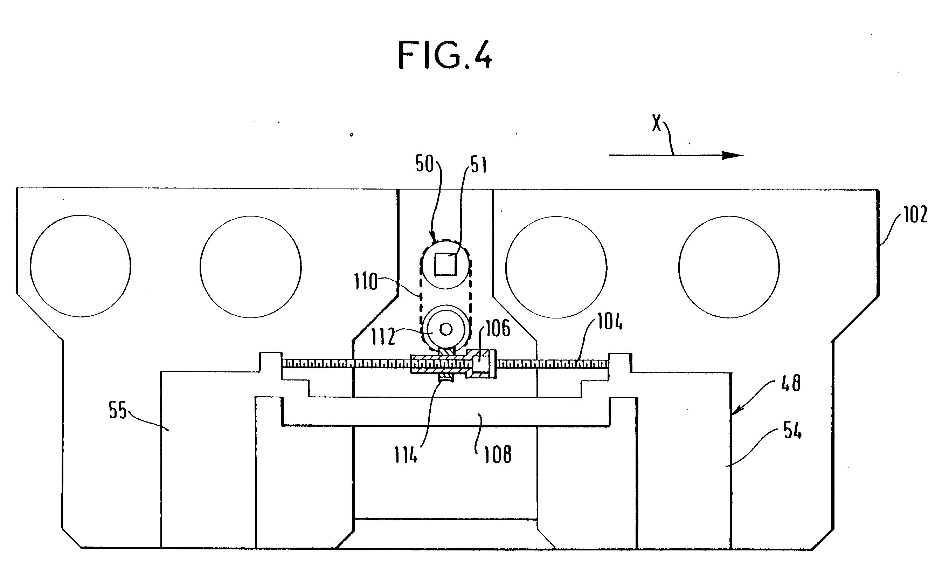

Un autre desdits capteurs de configuration est un capteur de position longitudinale 51 (voir figure 4) qui mesure la position longitudinale de l'ensemble desdits propulseurs par rapport au corps de véhicule 2 et fournit un signal de position longitudinale.

Il est apparu de ce qui précède que ledit véhicule comportait des actionneurs de déplacement de propulseurs 12, 50 pour déplacer lesdits propulseurs par rapport audit corps de véhicule, et des moyens de formation de signaux d'appui représentatifs desdits paramètres d'appui.

Une autre disposition avantageuse est qu'il comporte en outre des moyens de commande de sûreté faisant partie des moyens de traitement d'information 160 et utilisant ces signaux d'appui pour commander lesdits actionneurs de déplacement de manière à améliorer la sûreté du véhicule.

Ces actionneurs de déplacement comportent ledit actionneur de positionnement constitué par le moteur 50 et les quatre actionneurs d'inclinaison constitués par les quatre moteurs d'inclinaison tels que 12.

Une autre disposition avantageuse est que lesdits moyens de commande de sûreté 160 utilisent non seulement lesdits signaux d'appui, mais aussi des signaux de vitesses représentatifs de vitesses desdits propulseurs 4, ledit véhicule comportant des capteurs de vitesse pour fournir ces signaux.

Une autre disposition avantageuse est que lesdits moyens de commande de sûreté 160 commandent non seulement lesdits actionneurs de déplacement 12, 50 mais aussi lesdits moteurs d'avance 10.
Plus précisément, ces moyens de commande évaluent à chaque instant, d'une part, un degré de sûreté actuel, c'est-à-dire qu'ils déterminent en temps réel les valeurs de paramètres de sûreté représentatifs notamment de la stabilité et de l'adhérence du véhicule. Cette détermination résulte notamment de celle de certains desdits paramètres d'appui. La stabilité dépend par exemple de la position de la projection verticale du centre de gravité dans le polygone de sustentation défini par les points d'appui des propulseurs. L'adhérence dépend pour chacun de ces propulseurs de l'inclinaison de la force d'appui que cet organe applique contre le sol par rapport à une surface d'appui.
Les moyens de commande 160 évaluent d'autre part, notamment, l'influence que des déplacements des propulseurs ou des variations de couples d'avance auraient sur les paramètres de sûreté. Enfin ils élaborent des ordres pour optimiser ces paramètres de sûreté.

## Revendications

1. Véhicule pour interventions, notamment dans des bâtiments, ce véhicule comportant :
- un corps de véhicule (2) présentant une longueur et une largeur selon des directions longitudinale (X) et transversale (Y), respectivement,
- des propulseurs (4, 6, 7) prenant appui sur le sol pour supporter ledit corps de véhicule et pour le propulser selon ladite direction longitudinale,
- des moyens de liaison de propulseurs portés par ledit corps de véhicule pour porter lesdits propulseurs,
- chacun (4) desdits propulseurs comportant au moins un arbre récepteur transversal (8) s'étendant vers ledit corps de véhicule pour recevoir une énergie mécanique à partir de ce corps sous la forme d'une rotation de cet arbre, de manière à donner à ce propulseur au moins un mouvement d'avance pour assurer la propulsion dudit véhicule,
- ledit véhicule comportant encore des moteurs (10, 12) portés par ledit corps de véhicule pour fournir ladite énergie mécanique à chacun desdits propulseurs sous la forme de la rotation d'un arbre moteur transversal (14, 16) guidé en rotation par rapport audit corps de véhicule,
- et pour chaque dit arbre récepteur, des moyens de transmission externe pour faire entraîner chaque dit arbre récepteur par un dit arbre moteur, ce véhicule étant caractérisé par le fait que lesdits moyens de transmission externes pour faire entraîner un dit arbre récepteur (8, 9) par un dit arbre moteur (14, 16) sont essentiellement constitués par un compas de transmission comportant :
- une roue motrice (18, 20) d'axe transversal montée sur ledit arbre moteur,
- un premier élément de transmission linéaire (22, 24) qui s'étend à partir de ladite roue motrice selon une première branche de compas sensiblement perpendiculaire à l'axe de cette roue et qui est entraîné par cette roue,
- un arbre intermédiaire transversal (26, 28),
- des moyens de maintien d'écartement (30) pour maintenir une première distance entre lesdits arbres moteur (14, 16) et intermédiaire (26, 28), et une deuxième distance entre lesdits arbres intermédiaire et récepteur (8, 9), tout en permettant à ces arbres de se déplacer perpendiculairement à eux-mêmes,
- une roue intermédiaire motrice (32, 34) entraînée par ledit premier élément de transmission linéaire et montée sur ledit arbre intermédiaire pour entraîner celui-ci,
- une roue intermédiaire réceptrice (36, 38) montée sur ledit arbre intermédiaire,
- un deuxième élément de transmission linéaire (40, 42) qui s'étend à partir de ladite roue intermédiaire réceptrice selon une deuxième branche de compas sensiblement perpendiculaire à l'axe de cette roue et qui est entraîné par cette roue,
- et une roue réceptrice (44, 46) entraînée par ledit deuxième élément de transmission linéaire et montée sur ledit arbre récepteur pour entraîner celui-ci.

2. Véhicule selon la revendication 1, caractérisé par le fait que lesdits moyens de liaison de propulseur comportent pour chaque dit propulseur (4) :
- une structure de portage de propulseur (48) qui est mobile et guidée par rapport audit corps de véhicule (2) pour lui permettre des débattements qui sont des translations de cette structure dans au moins un intervalle de débattement (60) selon une direction de débattement (X, Z) correspondante perpendiculaire à ladite direction transversale (Y), cette structure portant ledit propulseur,
- et des moyens de positionnement de propulseur (50) pour imposer à ladite structure de portage de propulseur une position commandée dans un dit intervalle de débattement.

3. Véhicule selon la revendication 2, caractérisé par le fait que ladite structure de portage de propulseur comporte :
- une structure de guidage vertical (52) portant ledit propulseur et guidée verticalement pour lui permettre un déplacement de suspension dans un dit intervalle de débattement qui est vertical,
- et une structure de guidage longitudinal (54) portant ladite structure de guidage vertical par l'intermédiaire de moyens de suspension (56) pour réaliser une suspension dudit véhicule, cette structure de guidage longitudinal étant guidée longitudinalement par rapport audit corps de véhicule (2) pour lui permettre de prendre une dite position commandée dans un dit intervalle de débattement (60) qui est longitudinal, de manière à permettre de stabiliser ledit véhicule par déplacement longitudinal de son centre de gravité par rapport audit propulseur lorsque ce véhicule monte ou descend une pente présentée par le sol sur lequel il progresse.

4. Véhicule selon la revendication 3, caractérisé par le fait qu'il comporte quatre dits propulseurs latéraux avant droit (4), avant gauche, arrière droit (6) et arrière gauche (7), et quatre dites structures de guidage longitudinal avant droit (54), avant gauche, arrière droit (55) et arrière gauche pour ces quatre propulseurs, respectivement, lesdits moyens de positionnement de propulseur comportant des moyens de coordination de positions (50, 104) pour coordonner des positions qu'ils commandent à deux dits propulseurs par l'intermédiaire des deux dites structures de guidage horizontal (54, 55) correspondantes.

5. Véhicule selon la revendication 4, caractérisé par le fait que lesdits moyens de positionnement de propulseur comportent, pour chacune de deux paires droite et gauche qui comportent, respectivement, l'une lesdits propulseurs avant droit (4) et arrière droit (6), l'autre lesdits propulseurs avant gauche et arrière gauche (7),
- une entretoise de liaison (108) longitudinale reliant l'une à l'autre les deux structures de guidage horizontal (54, 55) qui correspondent aux deux propulseurs de cette paire,
- une vis de positionnement longitudinale (104) reliant également ces deux structures de guidage,
- un écrou d'entraînement rotatif (106) coopérant avec cette vis et bloqué longitudinalement par rapport audit corps de véhicule (2),
- et un moteur (50) pour faire tourner ledit écrou d'entraînement.

6. Véhicule selon la revendication 2, caractérisé par le fait que ledit propulseur (4) présente un intervalle d'appui au sol (58) qui s'étend selon ladite direction longitudinale et jusqu'à deux extrémités duquel il peut prendre appui sur le sol pour supporter ledit corps de véhicule,
- ladite structure de portage de propulseur (48) portant ce propulseur en lui permettant d'effectuer sur commande des mouvements d'inclinaison (62) qui sont des rotations autour d'un axe de propulseur (64),
- ledit véhicule comportant, pour chaque dit propulseur (4) :
- un moteur d'avance (10) et un moteur d'inclinaison (12) munis d'un arbre moteur d'avance (14) et d'un arbre moteur d'inclinaison (16) qui sont deux dits arbres moteurs,
- un arbre récepteur d'avance (8) et un arbre récepteur d'inclinaison (9) qui sont deux dits arbres récepteurs et qui s'étendent coaxialement selon ledit axe de propulseur (64),
- et des moyens de transmission externe d'avance (22, 40) et d'inclinaison (24, 42) constitués par deux dits compas de transmission pour faire entraîner lesdits arbres récepteurs d'avance et d'inclinaison par lesdits arbres moteurs d'avance et d'inclinaison, respectivement.

7. Véhicule selon la revendication 6, caractérisé par le fait qu'il comporte, pour chaque dit propulseur latéral (4), une plaque d'assemblage de propulseur (102) fixée de manière amovible audit corps de véhicule (2), s'étendant selon lesdites directions longitudinale et verticale (X, Z), et portant lesdits moteurs et arbres moteurs d'avance (10, 14) et d'inclinaison (12, 16), et lesdits moyens de transmission externe d'avance (22, 40) et d'inclinaison (24, 42).

8. Véhicule selon la revendication 4, caractérisé par le fait que ladite structure de portage de propulseur (48, 49, 66) comporte un arbre de portage de propulseur (66) s'étendant selon ledit axe de propulseur (64) dudit corps de véhicule (2) jusqu'au dit propulseur (4),
- ce propulseur comportant :
- une carcasse de propulseur (68, 70) guidée en rotation autour dudit arbre de portage (66),
- lesdits arbres récepteurs d'avance (8) et d'inclinaison (9) guidés coaxialement en rotation dans cet arbre de portage,
- un ensemble d'appui de propulseur (72, 74, 76, 78, 80) pour prendre appui sur le sol dans ledit intervalle d'appui au sol (58),
cet ensemble comportant au moins une roue d'avance (72) guidée en rotation, par rapport à ladite carcasse de propulseur (68, 70) autour d'un axe transversal,
- des moyens de transmission interne d'avance (82, 84, 86) pour faire entraîner au moins ladite roue d'avance par ledit arbre récepteur d'avance (8) de manière à donner un dit mouvement d'avance audit propulseur,
- et des moyens de transmission interne d'inclinaison (88, 90, 92, 94, 96, 98, 100) portés par ladite carcasse de propulseurs, entraînés en rotation par ledit arbre récepteur d'inclinaison, et prenant un appui de rotation sur ledit arbre de portage de propulseur pour donner audit propulseur un dit mouvement d'inclinaison.

9. Véhicule selon la revendication 8, caractérisé par le fait que lesdits moyens de transmission interne d'inclinaison (88-100) constituent un réducteur de vitesse pour donner audit mouvement d'inclinaison une vitesse de rotation inférieure à celle dudit arbre récepteur d'inclinaison (9), de manière à limiter les efforts qui doivent être appliqués par ledit moteur d'inclinaison auxdits moyens de transmission externe d'inclinaison (24, 42).

## Patentansprüche

1. Fahrzeug für Einsätze, insbesondere in Gebäuden, wobei dieses Fahrzeug folgende Teile umfaßt:
- ein Fahrzeuggehäuse (2) mit einer Länge und einer Breite jeweils in Längs- (X) und Querrichtung (Y),
- Antriebe (4, 6, 7), die sich am Boden abstützen, um das genannte Fahrzeuggehäuse zu tragen und es in die genannte Längsrichtung anzutreiben,
- Verbindungsvorrichtungen für die Antriebe, die vom Fahrzeuggehäuse getragen werden, um die Antriebe zu tragen,
- wobei jeder (4) dieser Antriebe mindestens eine quer angeordnete Abtriebswelle (8) aufweist, die sich zum Fahrzeuggehäuse (2) hin erstreckt, um von diesem Gehäuse aus eine mechanische Energie in Form einer Drehung dieser Welle aufzunehmen, in der Weise, daß dieser Antrieb mindestens in eine Vorwärtsbewegung versetzt wird, um die Fortbewegung des Fahrzeugs zu gewährleisten,
- wobei das Fahrzeug noch Motoren (10, 12) aufweist, die vom Fahrzeuggehäuse getragen werden und die mechanische Energie an jeden dieser Antriebe liefern, und zwar in Form der Drehung einer quer angeordneten Antriebswelle (14, 16), die gegenüber dem Fahrzeuggehäuse in Drehung geführt wird,
- und für jede dieser sogenannten Abtriebswellen Vorrichtungen zur externen Übersetzung, um jede sogenannte Abtriebswelle durch eine sog. Antriebswelle antreiben zu lassen,
wobei dieses Fahrzeug dadurch gekennzeichnet ist, daß die Vorrichtungen zur externen Übersetzung zum Antrieb einer sog. Abtriebswelle (8, 9) durch eine sog. Antriebswelle (14, 16) hauptsächlich aus einem Übertragungskompaß bestehen, der folgende Teile umfaßt:
- ein Antriebsrad (18, 20) mit Querachse, das auf die Antriebswelle montiert ist,
- ein erstes Element zur linearen Übersetzung (22, 24), das von dem Antriebsrad nach einem ersten Kompaßarm ausgeht, der im wesentlichen senkrecht zur Achse dieses Rades verläuft, und das von diesem Rad angetrieben wird,
- eine Zwischenquerwelle (26, 28),
- Vorrichtungen zur Abstandshaltung (30), um einen ersten Abstand zwischen den Antriebswellen (14, 16) und ZwischenWellen (26, 28) und einen zweiten Abstand zwischen den Zwischen- und den Abtriebswellen (8, 9) zu erhalten, wobei sich diese Wellen (26, 28, 8, 9) noch senkrecht zu sich selbst bewegen können,
- ein Zwischenantriebsrad (32, 34), das vom ersten Element zur Linearübersetzung angetrieben wird und auf die Zwischenwelle montiert ist, um diese anzutreiben,
- ein Zwischenabtriebsrad (36, 38), das auf die Zwischenwelle montiert ist,
- ein zweites Element zur Linearübersetzung (40, 42), das sich von der Zwischenwelle aus nach einem zweiten Arm des Kompasses erstreckt, der im wesentlichen senkrecht zur Achse dieses Rades ist, und das von diesem Rad angetrieben wird,
- und ein Abtriebsrad (44, 46), das von dem zweiten Element zur Linearübersetzung angetrieben wird und auf die Abtriebswelle montiert ist, um diese anzutreiben.

2. Fahrzeug nach Anspruch 1, dadurch gekennzeichnet, daß die Verbindungsvorrichtungen für die Antriebe für jeden Antrieb (4) folgende Teile umfassen:
- einen Antriebtragaufbau (48), der beweglich ist und bezüglich dem Fahrzeuggehäuse (2) so geführt wird, daß dieses Bewegungen ausführen kann, welche Bewegungen dieses Aufbaus in mindestens einem Bewegungsbereich (60) in einer entsprechenden, zur Querrichtung (Y) senkrechten Bewegungsrichtung (X, Z) sind, wobei dieser Aufbau den Antrieb trägt,
- und Vorrichtungen zur Positionierung des Antriebs (50), damit dieser Antriebtragaufbau eine bestimmte Position in einem solchen Bewegungsbereich einnimmt.

3. Fahrzeug nach Anspruch 2, dadurch gekennzeichnet, daß der Antriebtragaufbau folgende Teile umfaßt:
- einen Aufbau zur Vertikalführung (52), der den Antrieb trägt und vertikal geführt wird, um diesem eine Hängebewegung in einem sog. Bewegungsbereich zu ermöglichen, der vertikal ist.
- und einen Aufbau zur Längsführung (54), der den Aufbau zur vertikalführung mit Hilfe von Hängevorrichtungen (56) trägt, um eine Aufhängung des Fahrzeugs herzustellen, wobei dieser Längsführungsaufbau in Längsrichtung zum Fahrzeuggehäuse (2) geführt wird, damit er eine sog. gesteuerte Position in einem sog. Bewegungsbereich (60) einnehmen kann, der längs orientiert ist, so daß das besagte Fahrzeug durch Längsverlagerung seines Schwerpunkts bezüglich dem Antrieb stabilisiert werden kann, wenn dieses Fahrzeug sich eine Schrägfläche auf dem Untergrund, auf dem es sich fortbewegt, hinauf- oder hinabbewegt.

4. Fahrzeug nach Anspruch 3, dadurch gekennzeichnet, daß es vier sog. Seitenantriebe vorne rechts (4), vorne links, hinten rechts (6) und hinten links (7) sowie vier sog. Aufbauten zur Längsführung vorne rechts (54), vorne links, hinten rechts (55) und hinten links jeweils für diese vier Antriebe aufweist, wobei die Vorrichtungen zum Positionieren der Antriebe Vorrichtungen zur Positionskoordinierung (50, 104) zur Koordinierung von Positionen aufweisen, die sie zwei sog. Antrieben über die beiden jeweiligen sog. Aufbauten sur Horizontalführung (54, 55) zuweisen.

5. Fahrzeug nach Anspruch 4, dadurch gekennzeichnet, daß die Vorrichtungen zum Positionieren der Antriebe für jedes der beiden Paare links und rechts, wobei das eine die Antriebe vorn rechts (4) und hinten rechts (6) und das andere die Antriebe vorne links und hinten links (7) aufweist, folgende Teile umfassen:
- ein Längsverbindungsstück (108), das die beiden Aufbauten zur Horizontalführung (54, 55) verbindet, die den beiden Antrieben dieser Paars entsprechen,
- eine Längspositionierungsschraube (104), die ebenfalls diese beiden Führungsaufbauten verbindet,
- eine Drehantriebsmutter (106), in die diese Schraube paßt, und die zum Fahrzeuggehäuse (2) in Längsrichtung blockiert ist,
- und einen Motor (50), um diese Antriebsmutter in Drehung zu versetzen.

6. Fahrzeug nach Anspruch 2, dadurch gekennzeichnet, daß der besagte Antrieb (4) einen Auflagezwischenraum (58) zum Boden aufweist, der sich gemäß der Längsrichtung und bis zu zwei Enden hin erstreckt, von dem aus er sich am Boden abstützen kann, um das Fahrzeuggehäuse zu tragen, wobei
- der genannte Antriebtragaufbau (48) diesen Antrieb trägt und ihm gleichzeitig gesteuerte Neigungsbewegungen (62) ermöglicht, welche Drehungen um eine Antriebsachse (64) sind und
- das Fahrzeug für jeden sog. Antrieb (4) folgende Teile umfaßt:
- einen Motor (10) für die Vorwärtsbewegung und einen Motor (12) für die Neigungsbewegung, die über eine Antriebswelle (14) zur Vorwärtsbewegung und eine Antriebswelle (16) für die Neigungsbewegung verfügen, die beide sogenannte Antriebswellen sind,
- eine Abtriebswelle (8) für die vorwärtsbewegung und eine Abtriebswelle (9) für die Neigungsbewegung, die beide sogenannte Abtriebswellen sind und sich koaxial entlang der Antriebsachse (64) erstrecken,
- und Vorrichtungen zur externen Übersetzung für die Vorwärtsbewegung (22, 40) und für die Neigungsbewegung (24, 42), die aus zwei sog. Übertragungskompassen bestehen, um diese Abtriebswellen für die Vorwärts- und Neigungsbewegung von den jeweiligen Antriebswellen für die Vorwärts- und Neigungsbewegung antreiben zu lassen.

7. Fahrzeug nach Anspruch 6, dadurch gekennzeichnet, daß es für jeden sog. seitlichen Antrieb (4) eine Antriebmontageplatte (102) aufweist, die wegnehmbar am Fahrzeuggehäuse (2) befestigt ist, sich in der Längs- und Vertikalrichtung (X, Z) erstreckt und die Motoren und Vorschub-Antriebswellen (10, 14) und Neigungs-Antriebswellen (12 , 16) sowie die Vorrichtungen zur externen Übersetzung der Vorwärtsbewegung (22, 40) und der Neigungsbewegung (24, 42) trägt.

8. Fahrzeug nach Anspruch 4, dadurch gekennzeichnet, daß der besagte Antriebtragaufbau (48, 49, 66) eine Antriebtragwelle (66) aufweist, die sich in Achsrichtung der Antriebsachse (64) des Fahrzeuggehäuses (2) bis zum Antrieb (4) erstreckt,
- wobei dieser Antrieb folgende Teile umfaßt:
- einen Antriebrahmen (68, 70), der drehend um die genannte Tragwelle (66) geführt wird,
- wobei die Abtriebswellen für die Vorwärts- (8) und Neigungsbewegung (9) in dieser Tragwelle koaxial in Drehung geführt werden,
- eine Antriebstützeinheit (72, 74, 76, 80) zum Abstützen am Boden in dem Abstützzwischenraum (58) zum Boden,
wobei diese Einheit mindestens ein Rad für die Vorwärtsbewegung (72) umfaßt, das bezüglich dem Antriebrahmen (68, 70) drehend um eine Querachse geführt wird,
- Vorrichtungen zur internen Übersetzung der Vorwärtsbewegung (82, 84, 86), um wenigsten das besagte Rad für die Vorwärtsbewegung von der Vorschub-Abtriebswelle (8) antreiben zu lassen, damit auf den Antrieb eine sog. Vorwärtsbewegung übertragen wird,
- und Vorrichtungen zur Internen Übertragung der Neigung (88, 90, 92, 94, 96, 98, 100), die vom jeweiligen Antriebrahmen getragen werden und drehend von der Neigungs-Abtriebswelle angetrieben werden und drehend auf der Tragwelle des Antriebs aufliegen, damit dieser Antrieb eine sog. Neigungsbewegung ausführt.

9. Fahrzeug nach Anspruch 8, dadurch gekennzeichnet, daß die Vorrichtungen zur internen Neigungsübertragung (88-100) einen Drehzahlminderer darstellen, damit die Neigungsbewegung mit einer Drehzahl erfolgt, die niedriger ist als die der Neigungsabtriebswelle (9), um die Kräfte zu begrenzen, die vom Motor (12) für die Neigungsbewegung auf die Vorrichtungen zur externen Neigungsübersetzung (24, 42) ausgeübt werden.

## Claims

1. A vehicle for interventions, in particular in buildings, the vehicle comprising:
a vehicle body (2) having a length and a width in a longitudinal direction (X) and a transverse direction (Y), respectively;
propulsion units (4, 6, 7) bearing against the ground to support said vehicle body and to propel it along said longitudinal direction;
propulsion unit connection means carried by said vehicle body for carrying said propulsion units;
each of said propulsion units (4) including at least one transverse driven shaft (8) extending towards said vehicle body to receive mechanical drive from said body in the form of shaft rotation, thereby imparting at least forward motion to said propulsion unit for the purpose of propelling said vehicle;
said vehicle further including motors (10, 12) carried by said vehicle body for providing said mechanical drive to each of said propulsion units in the form of rotation applied to respective transverse drive shafts (14, 16) guided to rotate relative to said vehicle body; and
for each of said driven shafts, external transmission means for causing each of said driven shafts to be driven by one of said drive shafts, the vehicle being characterized by the fact that said external transmission means for causing one of said driven shafts (8, 9) to be driven by one of said drive shafts (14, 16) are essentially constituted by a scissor-like transmission comprising:
a transverse axis drive wheel (18, 20) mounted on said drive shaft;
a first linear transmission element (22, 24) extending from said drive wheel along a first branch of the scissor-like transmission substantially perpendicularly to the axis of said wheel and which is driven by said wheel;
a transverse intermediate shaft (26, 28);
spacing-maintaining means (30) for maintaining a first distance between said drive shafts and said intermediate shafts (26, 28), and for maintaining a second distance between said intermediate shafts and said driven shafts (8, 9) while enabling said shafts to move perpendicularly to their own axes;
an intermediate drive wheel (32, 34) driven by said first linear transmission element and mounted on said intermediate shaft to drive said intermediate shaft;
an intermediate driven wheel (36, 38) mounted on said intermediate shaft;
a second linear transmission element (40, 42) extending from said intermediate driven wheel along a second branch of the scissor-like transmission substantially perpendicularly to the axis of said wheel and driven by said wheel; and
a driven wheel (44, 46) driven by said second linear transmission element and mounted on said driven shaft to drive said shaft.

2. A vehicle according to claim 1, characterized by the fact that said propulsion unit connection means comprise for each of said propulsion units (4):
a propulsion unit carrying structure (48) which is movable and guided relative to said vehicle body (2) to enable said structure to move in translation at least over a displacement interval (60) in a corresponding displacement direction (X, Z) perpendicular to said transverse direction (Y), said structure carrying said propulsion unit; and
propulsion unit positioning means (50) for causing said propulsion unit carrying structure to take up a controlled position within said displacement interval.

3. A vehicle according to claim 2, characterized by the fact that said propulsion unit carrying structure comprises:
a vertical guide structure (52) carrying said propulsion unit and guided vertically to enable it to perform suspension displacement in one of said displacement intervals which is vertical; and
a longitudinal guide structure (54) carrying said vertical guide structure via suspension means (56) to provide suspension for said vehicle, said longitudinal guide structure being guided longitudinally relative to said vehicle body (2) to enable it to take up any such controlled position over one of said displacement intervals (60) which is longitudinal, thereby enabling the vehicle to be stabilized by displacing its center of gravity longitudinally relative to said propulsion unit whenever said vehicle is going up or down a slope of the ground over which it is moving.

4. A vehicle according to claim 3, characterized by the fact that it includes four of said lateral propulsion units, namely a front right unit (4), a front left unit, a back right unit (6), and a back left unit (7), and four of said longitudinal guide structures, namely a front right structure (54), a front left structure, a back right structure (55), and a back left structure corresponding to respective ones of said four propulsion units, said propulsion unit positioning means including position coordination means (50, 104) for coordinating the positions that two of said propulsion units are instructed to take up by means of two of said corresponding horizontal guide structures (54, 55).

5. A vehicle according to claim 4, characterized by the fact that said propulsion unit positioning means include, for each of the two pairs (one right pair, one left pair) respectively constituted by the front right propulsion unit (4) and the back right propulsion unit (6), and by the front left propulsion unit and the back left propulsion unit (7):
a longitudinal linking spacer (108) interconnecting the two horizontal guide structures (54, 55) corresponding to the two propulsion units of the pair;
a longitudinal positioning screw (104) also interconnecting the two guide structures;
a rotary drive nut (106) co-operating with said screw and fixed in longitudinal position relative to said vehicle body (2); and
a motor (50) for rotating said drive nut.

6. A vehicle according to claim 2, characterized by the fact that said propulsion unit (4) stands on the ground over a ground support distance (58) which extends along said longitudinal direction, with the propulsion unit being capable of bearing against the ground to support said vehicle body anywhere between the two ends of said ground support distance (58);
said propulsion unit carrying structure (48) carrying said propulsion unit while enabling it to perform tilting motion (62) on command, which motion is constituted by rotation about a propulsion unit axis (64);
said vehicle including for each of said propulsion units (4):
a vehicle advance motor (10) and a tilting motor (12) provided respectively with an advance shaft (14) and a tilting shaft (16) constituting said drive shafts;
an advance driven shaft (8) and a tilting driven shaft (9) constituting said two driven shafts and extending coaxially along said propulsion unit axis (64); and
external advance (22, 40) and tilting (24, 42) transmission means constituted by said two scissor-like transmissions for driving said advance and tilting driven shafts from said advance and tilting drive shafts,
respectively.

7. A vehicle according to claim 6, characterized by the fact that for each of said lateral propulsion units (4) it includes a propulsion unit assembly plate (102) removably fixed to said vehicle body (2), the plate extending in said longitudinal and vertical directions (X, Z) and carrying said advance and tilting motors and drive shafts (10, 14 & 12, 16) and said external advance and tilting transmission means (22, 40 & 24, 42).

8. A vehicle according to claim 4, characterized by the fact that said propulsion unit carrying structure (48, 49, 66) includes a propulsion unit carrying shaft (66) extending along said propulsion unit axis (64) of said vehicle body (2) to said propulsion unit (4);
said propulsion unit comprising:
a propulsion unit housing (68, 70) guided to rotate about said carrying shaft (66);
said advance and tilting driven shafts (8, 9) guided to rotate coaxially inside said carrying shafts;
a propulsion unit support assembly (72, 74, 76, 78, 80) for standing on the ground over said ground support distance (58), said assembly including at least one advance wheel (72) guided to rotate relative to said propulsion unit housing (68, 70) about a transverse axis;
internal advance transmission means (82, 84, 86) for driving at least said advance wheel from said advance driven shaft (8) in such a manner as to impart said advance motion to said propulsion unit; and
internal tilting transmission means (88, 90, 92, 94, 96, 98, 100) carried by said propulsion unit housing, rotated by said tilting driven shaft and applying rotary reaction against said propulsion unit carrying shaft in order to impart said tilting motion to said propulsion unit.

9. A vehicle according to claim 8, characterized by the fact that said internal tilting transmission means (88-100) constitute a speed reduction unit for imparting a speed rotation to said tilting motion which is lower than that of said tilting driven shaft (9), thereby limiting the forces that need to be applied by said tilting motor to said external tilting transmission means (24, 42).
